(19) Europäisches Patentamt
European Patent Office
Office européen des brevets

(11) EP 3 686 245 A1

(12) EUROPEAN PATENT APPLICATION

(43) Date of publication:
**29.07.2020 Bulletin 2020/31**

(21) Application number: **19153474.2**

(22) Date of filing: **24.01.2019**

(51) Int Cl.:
***C08L 69/00*** *(2006.01)*
***C08L 67/02*** *(2006.01)*
***C08L 83/04*** *(2006.01)*
***C08L 51/04*** *(2006.01)*
***C08L 23/08*** *(2006.01)*
*C08K 3/04 (2006.01)*
*C08K 3/14 (2006.01)*
*C08K 3/28 (2006.01)*
*C08K 5/42 (2006.01)*
*C08G 63/183 (2006.01)*
*C08K 3/22 (2006.01)*
*C08K 3/34 (2006.01)*
*C08K 3/38 (2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **SABIC Global Technologies B.V.**
**4612 PX Bergen op Zoom (NL)**

(72) Inventor: **GUO, Mingcheng**
**Shanghai, 201319 (CN)**

(74) Representative: **Elzaburu S.L.P.**
**Miguel Angel 21, 2nd floor**
**28010 Madrid (ES)**

# (54) PROCESSING AIDS FOR DIE LIP BUILDUP SUPPRESSION AND USES THEREOF

(57) Disclosed herein is a composition for suppressed die lip buildup. The composition may comprise from about 20 wt. % to about 98 wt. % of a polycarbonate; from about 0.01 wt. % to about 30 wt. % of a polybutylene terephthalate; from about 0.5 wt. % to about 60 wt. % of a functional filler; from about 0.1 wt. % to about 5 wt. % of an ultra high molecular weight polydimethylsiloxane; and from about 0.01 wt. % to about 30 wt. % of a flame retardant component. The composition may exhibit a notched Izod impact strength of greater than 30 J/m when tested in accordance with ASTM D256 and may exhibit less die buildup during a continuous extrusion process when compared to a substantially similar composition in the absence of the ultra high molecular weight polydimethylsiloxane.

EP 3 686 245 A1

## Description

TECHNICAL FIELD

The disclosure concerns compositions for suppressed die lip buildup, specifically those compositions including a processing aid.

BACKGROUND

Thermoplastic materials are used across a number of fields. Processing of such engineering thermoplastics may often incorporate extrusion and related processes. Some extrusion processes may be extensive or of an extended duration such as continuous extrusion. It is desirable that engineering thermoplastics may withstand extended conditions but also be resistant to buildup of materials at the die lip of the extruder. Accordingly, there remains a need in the art for thermoplastic materials that maintain desirable physical and mechanical properties while limiting buildup at the die.

SUMMARY

The disclosure relates to a composition for suppressed die lip buildup during polymer processes such as extrusion. The composition may comprise from about 20 wt. % to about 98 wt. % of a polycarbonate; from about 0.01 wt. % to about 30 wt. % of a polyalkylene terephthalate; from about 0.5 wt. % to about 60 wt. % of a functional filler; from about 0.1 wt. % to about 5 wt. % of a processing aid; and from about 0.01 wt. % to about 30 wt. % of a flame retardant component. The combined weight percent value of all components does not exceed 100 wt. %, and all weight percent values are based on the total weight of the composition. The composition may exhibit a notched Izod impact strength of greater than 30 J/m when tested in accordance with ASTM D256, and may exhibit less die buildup during a continuous extrusion process when compared to a substantially similar composition in the absence of the processing aid. In certain aspects, the processing aid may comprise an ultra-high molecular weight polydimethylsiloxane.

The disclosure also relates methods of forming the disclosed compositions as well as articles formed therefrom.

DETAILED DESCRIPTION OF ILLUSTRATIVE EMBODIMENTS

Manufacturers in various industries, including the consumer electronics market, may desire improved processing performance for engineering thermoplastics. Thermoplastic materials are used across a number of fields. Processing of such engineering thermoplastics may often incorporate extrusion and related processes. Some extrusion processes may be extensive or of an extended duration such as continuous extrusion. It is desirable that engineering thermoplastics may withstand extended conditions but also be resistant to buildup of materials at the die lip of the extruder. Accordingly, there remains a need in the art for thermoplastic materials that maintain desirable physical and mechanical properties while limiting buildup at the die.

Conventional formulations that include functional fillers often include a polyethylene or polyethylene terephthalate as processing aid to ensure that the composition disperses properly during processing. This may be problematic in polycarbonate based compositions as polyethylene is not particularly compatible with polycarbonate as polyethylene is non-polar while polycarbonate is more polar. PE also has a lower processing window (lower temperature range for processing) than polycarbonate. Accordingly, PE likely separates from the polymer matrix forming the extrusion stream during processing which may present as excess or stray strands during extrusion. The present disclosure provides a composition configured to suppress such separation and stray strands during certain processing methods. The disclosed compositions may comprise a polycarbonate, a polyalkylene polymer, a functional filler, and a processing aid. Specifically, a polycarbonate and polybutylene terephthalate may be combined with a functional filler and a processing aid to achieve a composition having reduced die buildup during processing methods such as continuous extrusion.

Disclosed herein are compositions configured for suppressed die lip buildup. The composition may comprise from about 20 wt. % to about 98 wt. % of a polycarbonate; from about 0.01 wt. % to about 30 wt. % of a polybutylene terephthalate; from about 0.5 wt. % to about 60 wt. % of a functional filler; from about 0.1 wt. % to about 5 wt. % of an ultra high molecular weight polydimethylsiloxane; and from about 0.01 wt. % to about 30 wt. % of a flame retardant component. The composition may exhibit a notched Izod impact strength of greater than 30 J/m when tested in accordance with ASTM D256, and wherein the composition exhibits less die buildup during a continuous extrusion process when compared to a substantially similar composition in the absence of the ultra-high molecular weight polydimethylsiloxane.

The compositions described herein are particularly useful in processing polymers where the processing comprises extrusion, for example. The disclosed compositions combine polycarbonate and a polyalkylene polymers with a processing aid and functional fillers. In certain aspects, flame retardant additives may be included to provide flame performance. The compositions may further comprise one or more additional additives. The disclosed thermoplastic

compositions may exhibit reduced accumulation of polymer at a die face during extrusion, as well as, comparable mechanical and physical properties when compared to a substantially similar composition polycarbonate and polyalkylene polymers and in the absence of the processing aid.

The present disclosure can be understood more readily by reference to the detailed description, examples, drawings, and claims described herein. It is to be understood that this disclosure is not limited to the specific thermoplastic compositions, articles, devices, systems, and/or methods disclosed unless otherwise specified, as such can, of course, vary. It is also to be understood that the terminology used herein is for the purpose of describing particular aspects only and is not intended to be limiting. Those of ordinary skill in the relevant art will recognize and appreciate that changes and modifications can be made to the various aspects of the disclosure described herein, while still obtaining the beneficial results of the present disclosure. It will also be apparent that some of the desired benefits of the present disclosure can be obtained by selecting some of the features of the present disclosure without utilizing other features. The present description is provided as illustrative of the principles of the disclosure and not in limitation thereof. Various combinations of elements of this disclosure are encompassed by this disclosure, *e.g.,* combinations of elements from dependent claims that depend upon the same independent claim.

## POLYMER RESIN

The disclosed composition may comprise a polymer base resin. In some aspects, a suitable polymer base resin may include, but is not limited to, polyamide (PA), polyphthalamide (PPA), polyetherimide (PEI), polyformaldehyde (POM), polyphenylene sulfide (PPS), polysulfone (PSF), acrylonitrile-butadiene-styrene (ABS), polyetheretherketone (PEEK), styrene acrylonitrile (SAN), or a combination thereof.

In specific aspects of the present disclosure, the composition may provide polycarbonate polymer based compositions that exhibit suppressed die buildup during extrusion processes. A polycarbonate can include any polycarbonate material or mixture of materials, for example, as recited in U.S. Patent No. 7,786,246, which is hereby incorporated in its entirety for the specific purpose of disclosing various polycarbonate compositions and methods. The term polycarbonate can be further defined as compositions having repeating structural units of the formula (1):

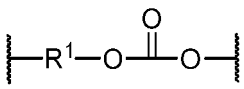 (1),

in which at least 60 percent of the total number of $R^1$ groups are aromatic organic radicals and the balance thereof are aliphatic, alicyclic, or aromatic radicals. In a further aspect, each $R^1$ is an aromatic organic radical and, more preferably, a radical of the formula (2):

$-A^1-Y^1-A^2-$ (2),

wherein each of $A^1$ and $A^2$ is a monocyclic divalent aryl radical and $Y^1$ is a bridging radical having one or two atoms that separate $A^1$ from $A^2$. In various aspects, one atom separates $A^1$ from $A^2$. For example, radicals of this type include, but are not limited to, radicals such as -O-, -S-, -S(O)-, $-S(O_2)-$, -C(O)-, methylene, cyclohexyl-methylene, 2-[2.2.1]-bicycloheptylidene, ethylidene, isopropylidene, neopentylidene, cyclohexylidene, cyclopentadecylidene, cyclododecylidene, and adamantylidene. The bridging radical $Y^1$ is preferably a hydrocarbon group or a saturated hydrocarbon group such as methylene, cyclohexylidene, or isopropylidene.

In various further aspects, "polycarbonates" and "polycarbonate resins" as used herein further include homopolycarbonates, copolymers including different $R^1$ moieties in the carbonate (referred to herein as "copolycarbonates"), copolymers including carbonate units and other types of polymer units, such as ester units, polysiloxane units, and combinations including at least one of homopolycarbonates and copolycarbonates. As used herein, "combination" is inclusive of blends, mixtures, alloys, reaction products, and the like.

In some aspects, the polycarbonate polymer is a homopolymer. For example, the polycarbonate homopolymer may comprise repeating units derived from bisphenol A.

In a still further aspect, the polycarbonate component is a copolymer. In a still further aspect, the copolymer includes repeating units derived from BPA. In yet a further aspect, the copolymer includes repeating units derived from sebacic acid. In an even further aspect, the copolymer includes repeating units derived from sebacic acid and BPA. Useful polycarbonate copolymers are commercially available and include, but are not limited to, those marketed under the trade names LEXAN™ EXL and LEXAN™ HFD polymers and are available from SABIC.

In certain examples, the polycarbonate polymer is a Bisphenol-A polycarbonate, a high molecular weight (Mw) high flow/ductile (HFD) polycarbonate, a low Mw HFD polycarbonate, or a combination thereof.

The flow/ductile polycarbonate may comprise a polycarbonate that provides very high flow (e.g., about 40% greater than a conventional polycarbonate), while maintaining the toughness and ductility for flowability that is typical in conventional polycarbonate.

An exemplary Bisphenol-A polycarbonate suitable for use in aspects of the disclosure includes, but is not limited to, a PC Copolymer (various grades of which are available from SABIC), which includes repeating units derived from BPA and repeating units derived from sebacic acid. In a further aspect, the polycarbonate polymer may be a Bisphenol-A polycarbonate homopolymer, or a blend of the PC copolymer and the Bisphenol-A polycarbonate homopolymer.

In yet further examples, a polycarbonate copolymer may comprise a polycarbonate-polysiloxane copolymer. Non-limiting examples of polycarbonate-polysiloxane copolymers may comprise various copolymers available from SABIC™. In an aspect, the polysiloxane-polycarbonate copolymer can contain 6 % by weight polysiloxane content based upon the total weight of the polysiloxane-polycarbonate copolymer. In various aspects, the 6 % by weight polysiloxane block copolymer can have a weight average molecular weight (Mw) of from about 23,000 to 24,000 Daltons using gel permeation chromatography with a bisphenol A polycarbonate absolute molecular weight standard. In certain aspects, the 6% weight siloxane polysiloxane-polycarbonate copolymer can have a melt volume flow rate (MVR) of about 10 cubic centimeters per 10 minutes ($cm^3$/ 10 min) at 300 °C /1.2 kilogram (kg) (see for example, C9030T, a 6 % by weight polysiloxane content copolymer available from SABIC as "transparent" EXL C9030T resin polymer).

In another example, the polysiloxane-polycarbonate block can comprise 20 % by weight polysiloxane based upon the total weight of the polysiloxane block copolymer. For example, an appropriate polysiloxane-polycarbonate copolymer can be a bisphenol A polysiloxane-polycarbonate copolymer endcapped with para-cumyl phenol (PCP) and having a 20 % polysiloxane content (see C9030P, commercially available from SABIC as the "opaque" EXL C9030P). In various aspects, the weight average molecular weight of the 20 % polysiloxane block copolymer can be about 29,900 Daltons to about 31,000 Daltons when tested according to a polycarbonate standard using gel permeation chromatography (GPC) on a cross-linked styrene-divinylbenzene column and calibrated to polycarbonate references using a UV-VIS detector set at 264 nanometers (nm) on 1 milligram per milliliter (mg/ml) samples eluted at a flow rate of about 1.0 ml/minute. Moreover, the 20% polysiloxane block copolymer can have an MVR at 300 °C/1.2 kg of 7 $cm^3$/ 10 min and can exhibit siloxane domains sized in a range of from about 5 micrometers to about 20 micrometers (microns, $\mu$m).

The polycarbonate of the present disclosure may contain endcapping agents. Any suitable endcapping agents can be used provided that such agents do not significantly adversely impact the desired properties of the polycarbonate composition (transparency, for example). Endcapping agents include mono-phenolic compounds, mono-carboxylic acid chlorides, and/or mono-chloroformates. Mono-phenolic endcapping agents are exemplified by monocyclic phenols such as phenol and $C_1$-$C_{22}$ alkyl-substituted phenols such as p-cumyl-phenol, resorcinol monobenzoate, and p- and tertiary-butyl phenol; and monoethers of diphenols, such as p-methoxyphenol. In some examples, the polycarbonate comprises paracumyl phenol endcapping.

Additionally, some polycarbonates include from about 200 to about 2000 ppm, or from about 250 to about 1800 ppm Fries products.

As described herein, the composition may comprise from about 20 wt. % to about 98 wt. % of a polycarbonate. In further examples, the composition may comprise from about 15 wt. % to about 98 wt. %, from about 18 wt. % to about 98 wt. %, from about 22 wt. % to about 95 wt. %, from about 25 wt. % to about 95 wt. %, from about 30 wt. % to about 90 wt. %, from about 15 wt. % to about 90 wt. %, from about 23 wt. % to about 90 wt. %, from about 23 wt. % to about 91 wt. %, from about 23 wt. % to about 70 wt. %, from about 25 wt. % to about 75 wt. %, from about 30 wt. % to about 90 wt. %, or from about 18 wt. % to about 85 wt. % .

## POLYALKYLENE POLYMER

In various aspects of the present disclosure, the composition may comprise a polyalkylene polymer. For example, the composition may comprise a polyalkylene ester (a polyester), such as a polyalkylene terephthalate polymer.

Polyesters have repeating units of the following formula (A):

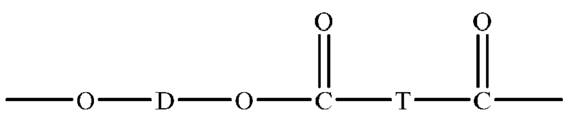

(A)

wherein T is a residue derived from a terephthalic acid or chemical equivalent thereof, and D is a residue derived from polymerization of an ethylene glycol, butylene diol, specifically 1,4- butane diol, or chemical equivalent thereof. Chemical equivalents of diacids include dialkyl esters, e.g., dimethyl esters, diaryl esters, anhydrides, salts, acid chlorides, acid bromides, and the like. Chemical equivalents of ethylene diol and butylene diol include esters, such as dialkylesters,

diaryl esters, and the like. In addition to units derived from a terephthalic acid or chemical equivalent thereof, and ethylene glycol or a butylene diol, specifically 1,4-butane diol, or chemical equivalent thereof, other T and/or D units can be present in the polyester, provided that the type or amount of such units do not significantly adversely affect the desired properties of the thermoplastic compositions. Poly(alkylene arylates) can have a polyester structure according to formula (A), wherein T comprises groups derived from aromatic dicarboxylates, cycloaliphatic dicarboxylic acids, or derivatives thereof.

Examples of specifically useful T groups include, but are not limited to, 1,2-,1,3-, and 1,4-phenylene; 1,4- and 1,5-naphthylenes; cis- or trans- 1,4-cyclohexylene; and the like. Specifically, where T is 1,4-phenylene, the poly(alkylene arylate) is a poly(alkylene terephthalate). In addition, for poly(alkylene arylate), specifically useful alkylene groups D include, for example, ethylene, 1,4-butylene, and bis-(alkylene-disubstituted cyclohexane) including cis- and/or trans-1,4-(cyclohexylene)dimethylene.

Examples of polyalkylene terephthalate include polyethylene terephthalate (PET), poly(1,4-butylene terephthalate) (PBT), and poly(propylene terephthalate) (PPT). Also useful are poly(alkylene naphthoates), such as poly(ethylene naphthanoate) (PEN), and poly(butylene naphthanoate) (PBN). A useful poly(cycloalkylene diester) is poly(cyclohexanedimethylene terephthalate) (PCT). Combinations including at least one of the foregoing polyesters may also be used.

Copolymers including alkylene terephthalate repeating ester units with other ester groups can also be useful. Useful ester units can include different alkylene terephthalate units, which can be present in the polymer chain as individual units, or as blocks of poly(alkylene terephthalates). Specific examples of such copolymers include poly(cyclohexanedimethylene terephthalate)-co-poly(ethylene terephthalate), abbreviated as PETG where the polymer includes greater than or equal to 50 mol % of poly(ethylene terephthalate), and abbreviated as PCTG where the polymer comprises greater than 50 mol % of poly(1,4-cyclohexanedimethylene terephthalate). Poly(cycloalkylene diester)s can also include poly(alkylene cyclohexanedicarboxylate)s. Of these, a specific example is poly(1,4-cyclohexane-dimethanol-1,4-cyclohexanedicarboxylate) (PCCD), having recurring units of formula (B):

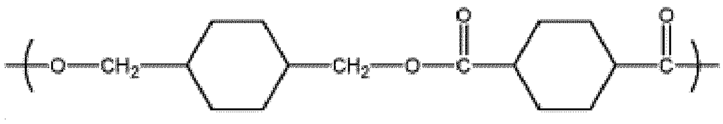

(B)

wherein, as described using formula (A), $R^2$ is a 1,4-cyclohexanedimethylene group derived from 1,4-cyclohexanedimethanol, and T is a cyclohexane ring derived from cyclohexanedicarboxylate or a chemical equivalent thereof, and can comprise the cis-isomer, the trans-isomer, or a combination comprising at least one of the foregoing isomers.

In another aspect, the composition can further comprise poly(1,4-butylene terephthalate) or "PBT" resin. PBT may be obtained by polymerizing a glycol component of which at least 70 mol %, preferably at least 80 mol %, consists of tetramethylene glycol and an acid or ester component of which at least 70 mol %, preferably at least 80 mol %, consists of terephthalic acid and/or polyester-forming derivatives therefore. Commercial examples of PBT include those available under the trade names VALOX™ 315, VALOX™ 195 and VALOX™ 176, manufactured by SABIC™, having an intrinsic viscosity of 0.1 deciliters per gram (dl/g) to about 2.0 dl/g (or 0.1 dl/g to 2 dl/g) as measured in a 60:40 phenol/tetrachloroethane mixture or similar solvent at 23 degrees Celsius (°C) to 30° C. In one aspect, the PBT resin has an intrinsic viscosity of 0.1 dl/g to 1.4 dl/g (or about 0.1 dl/g to about 1.4 dl/g), specifically 0.4 dl/g to 1.4 dl/g (or about 0.4 dl/g to about 1.4 dl/g).

As described herein, the composition may comprise from about 0.01 wt. % to about 30 wt. % of a polyalkylene polymer. In further examples, the composition may comprise from about 0.01 wt. % to about 30 wt. %, from about 0.01 wt. % to about 30 wt. %, from about 0.01 wt. % to about 30 wt. %, from about 0.01 wt. % to about 35 wt. %, from about 0.01 wt. % to about 28 wt. %, from about 0.01 wt. % to about 10 wt. %, from about 0.01 wt. % to about 10 wt. %, from about 0.01 wt. % to about 8 wt. %, from about 0.01 wt. % to about 5 wt. %, from about 0.01 wt. % to about 3 wt. %, or from about 0.01 wt. % to about 12 wt. %.

## PROCESSING AID

The disclosed thermoplastic compositions may comprise a processing aid. The disclosed processing aid may comprise ultra-high molecular weight polydimethylsiloxane. The processing aid may comprise an oligomeric siloxane additive.

In various aspects, the processing aid comprises ultra-high molecular weight (UHMW) polydimethylsiloxane (PDMS). With proper dispersion of UHMW PDMS in a thermoplastic polymer such as polycarbonate, the siloxane may form a stable dispersion in the polymer matrix, although siloxane is generally incompatible with the organic polymer.

Considering the hydrophobic and non-polar characteristics of siloxane, siloxane may be less compatible with polycarbonate which is weakly polar. The UHMW siloxane does not migrate to the polymer surface during processing even at temperatures above the glass transition temperature.

Polydimethylsiloxanes, feature a polymeric backbone of alternating silicon and oxygen atoms with methyl groups attached to silicon. In some examples, methyl groups may be replaced with functional groups to influence compatibility and mobility within a given thermoplastic matrix. The number of repeating units in polydimethylsiloxanes may range from one to several thousand, which accounts for molecular weights ranging from 236 to as much as one million. The flexibility and free volume of siloxane chains in PDMS allow silicone polymers to exist as transparent fluids with viscosities increasing as molecular weight increases.

An UHMW PDMS may approach a molecular weight of one million. According to the present disclosure, an UHMW PDMS may have a molecular weight of at least 110,000 g/mol or at least 120,000 g/mol according to a GPC method using polystyrene standards. Generally, UHMW polydimethylsiloxanes are non-crosslinked and may flow like molten polymer. An UHMW PDMS may have a viscosity from 10 million $mm^2$ /sec to 50 million $mm^2$ /sec (centistoke, or cSt) range. With proper dispersion of UHMW PDMS in a thermoplastic polymer, the siloxane will form a stable dispersion in the polymer matrix even though it is incompatible with the organic polymer. The siloxane does not migrate to the polymer surface during processing even at temperatures above the glass transition temperature.

Higher molecular weight silicones, with viscosities ranging from 10,000 $mm^2$/sec to 60,000 $mm^2$/sec, have been used as internal additives in thermoplastic polymers to give processing advantages and surface property improvements, such as reduced coefficient of friction, improved abrasion resistance, lower wear rates, mold release, easier processing, faster mold cycles and other benefits. In various aspects, the processing aid comprises a polydimethylsiloxane having a viscosity of at least 10 million $mm^2$/sec when measured according to ASTM D7042.

The disclosed compositions may comprise an UHMW PDMS present as a masterbatch (MB). For example, the UHMW may be present in a polycarbonate MB.

The UHMW PDMS concentrate may be in a masterbatch of other suitable resins including, but not limited to: high density polyethylene (HDPE), linear low density polyethylene (LLDPE), polypropylene (PP), low density polyethylene (LDPE), high pact PS (HIPS), polyoxymethylene (acetal) copolymer, styrene acrylonitrile (SAN), thermoplastic polyester, and polyamide (PA).

The composition may comprise a processing aid in an amount of from about 0.1 wt. % to about 5 wt. %. In some examples, the silicon based additive may be present in an amount of from about 0.01 wt. % to about 3 wt. %, 0.01 wt. % to about 2 wt. %, 0.01 wt. % to about 1.5 wt. %, 0.01 wt. % to about 1.2 wt. %. For example, the composition may comprise about 1 wt. % of an UHMW PDMS.

## FUNCTIONAL FILLER

Aspects of the thermoplastic composition include a functional filler. Functional fillers may refer to fillers that are incorporated into a polymer matrix to impart a particular performance profile. For example, functional fillers may comprise electrically conductive filler, a thermally conductive filler, or a modulus enhancing filler, or a combination thereof.

In some examples, the functional filler may comprise Boron Nitride (BN), SiC, graphite, expanded graphite, expandable graphite, graphene, carbon fiber, carbon powder, carbon nanotube, ZnS, CaO, MgO, ZnO, $TiO_2$, $H_2Mg_3(SiO_3)_4$, $CaCO_3$, $Mg(OH)_2$, mica, BaO, $\gamma$-AlO(OH), $\alpha$-AlO(OH), $Al(OH)_3$, $BaSO_4$, $CaSiO_3$, $SiO_2$, solid glass bead, hollow glass bead, glass fiber, basalt fiber, $MgO \cdot xAl_2O_3$, $CaMg(CO_3)_2$, wollastonite, and a clay, or a combination thereof.

In various aspects, the functional filler may comprise a thermally conductive filler. Moreover, the composition can comprise highly thermally conductive fillers, where the thermal conductivity is greater than or equal to 50 W/m·K. Examples of the high thermally conductive fillers can include, but are not limited to, AlN (aluminum nitride), $Al_4C_3$ (aluminum carbide), $Al_2O_3$ (Aluminum oxide), AlON (aluminum oxynitride) BN (boron nitride), $MgSiN_2$ (magnesium silicon nitride), SiC (Silicon carbide), $Si_3N_4$ (silicon nitride), ceramic-coated graphite, and combinations thereof. Other suitable high thermally conductive fillers include graphite, expanded graphite, graphene, carbon fiber, carbon nanotube (CNT), graphitized carbon black, or a combination thereof. Such fillers suitably have thermal conductivities of more than about 50 W/m·K, e.g., from 50 W/m·K to 60 W/m·K, from 50 W/m·K to 100 W/m·K, up to about 100 W/m·K, up to about 500 W/m·K, or greater. It should be understood that the disclosed compositions can include one or more of the foregoing but may also be free of one or more of the foregoing.

In a further aspect, the functional filler may comprise a low thermal conductive filler. Such fillers can have thermal conductivities in the range of from about 0.0001 30 W/m·K to about 30 W/m·K, or from about 10 W/m·K to about 20 W/m·K. Exemplary low thermal conductive fillers can include ZnS (Zinc sulfide), CaO (Calcium oxide), MgO (Magnesium oxide), ZnO (Zinc oxide), or $TiO_2$ (Titanium dioxide), or a combination thereof.

The functional filler may comprise an electrically conductive filler. As an example, carbon-based fillers can be used as electrically conductive fillers in thermoplastics. Various types of electrically conductive carbon fibers can also be used in the electrically conductive composition. Carbon fibers are generally classified according to their diameter,

morphology, and degree of graphitization (morphology and degree of graphitization being interrelated). These characteristics are presently determined by the method used to synthesize the carbon fiber.
Electrically conductive carbon black is a conductive powder commercially available and sold under an array of trade names including S. C. F. (Super Conductive Furnace), E. C. F. (Electric Conductive Furnace), Ketjen Black EC (available from Akzo Co., Ltd.) or acetylene black.

## FLAME RETARDANT ADDITIVE

In some aspects, the disclosed compositions may comprise a flame retardant additive. The flame retardant additive may comprise a flame retardant material or mixture of flame retardant materials suitable for use in the inventive thermoplastic compositions. More specifically, the composition may comprise a non-bromine flame retardant additive. The flame retardant additive may be free of, or substantially free of, halogen, such as bromine. In various embodiments, the thermoplastic resin can comprise from about 0.01 wt. % to about 1 wt. % of a non-bromine flame retardant additive.
In an aspect, the flame retardant additive can comprise an alkali metal salt. For example, the flame retardant additive may comprise an alkali metal salt of perfluorinated alkyl sulfonates. The flame retardant may comprise an alkali metal salt of perfluorinated C1-C16 alkyl sulfonates such as potassium perfluorobutane sulfonate (Rimar salt), potassium perfluoroctane sulfonate, tetraethylammonium perfluorohexane sulfonate, potassium diphenylsulfone sulfonate (KSS), and the like, sodium benzene sulfonate, sodium toluene sulfonate (NATS) and the like; and salts formed by reacting for example an alkali metal or alkaline earth metal (for example lithium, sodium, potassium, magnesium, calcium and barium salts) and an inorganic acid complex salt, for example, an oxo-anion, such as alkali metal and alkaline-earth metal salts of carbonic acid, such as $Na_2CO_3$, $K_2CO_3$, $MgCO_3$, $CaCO_3$, and $BaCO_3$ or fluoro-anion complex such as $Li_3AlF_6$, $BaSiF_6$, $KBF_4$, $K_3AlF_6$, $KAlF_4$, $K_2SiF_6$, and/or $Na_3AlF_6$ or the like. Rimar salt and KSS and NATS, alone or in combination with other flame retardants, are particularly useful in the compositions disclosed herein. In an aspect, the thermoplastic resin can comprise from about 0.01 wt. % to about 1 wt. % of potassium perfluorobutane sulfonate, Rimar salt.
In further aspects, the flame retardant does not contain a halogen such as bromine or chlorine, and can comprise phosphorous. Non-brominated and non-chlorinated phosphorus-containing flame retardants can include, for example, organic phosphates and organic compounds containing phosphorus-nitrogen bonds. Exemplary di- or polyfunctional aromatic phosphorus-containing compounds include resorcinol tetraphenyl diphosphate (RDP), the bis(diphenyl) phosphate of hydroquinone and the bis(diphenyl) phosphate of bisphenol-A, respectively, their oligomeric and polymeric counterparts, and the like. Other exemplary phosphorus-containing flame retardant additives include phosphonitrilic chloride, phosphorus ester amides, phosphoric acid amides, phosphonic acid amides, phosphinic acid amides, tris(aziridinyl) phosphine oxide, polyorganophosphazenes (such as phenoxycyclophosphazene), and polyorganophosphonates. In various aspects, the composition can comprise from about 0.01 wt. % to about 10 wt. % of a phosphorous containing flame retardant.
The composition may comprise a flame retardant additive as described herein in an amount of from about 0.01 wt. % to about 10 wt. %. In some examples, the flame retardant additive may be present in an amount of from about 0.01 wt. % to about 1 wt. %, 0.01 wt. % to about 1.5 wt. %, 0.01 wt. % to about 3 wt. %, 0.01 wt. % to about 5 wt. %, 0.01 wt. % to about 8 wt. %. 0.1 wt. % to about 1 wt. %, 2 wt. % to about 10 wt. %, or from about 2 wt. % to about 6 wt. %.

## OTHER ADDITIVES

The disclosed compositions can optionally comprise one or more additives conventionally used in the manufacture of molded thermoplastic parts with the proviso that the optional additives do not adversely affect the desired properties of the resulting composition. Mixtures of optional additives can also be used. Such additives may be mixed at a suitable time during the mixing of the components for forming the composite mixture. For example, the disclosed thermoplastic compositions can comprise one or more fillers, plasticizers, stabilizers, anti-static agents, flame-retardants, impact modifiers, colorant, antioxidant, and/or mold release agents. In one aspect, the composition further comprises one or more optional additives selected from an antioxidant, flame retardant, inorganic filler, and stabilizer.
Exemplary heat stabilizers include, for example, organo phosphites; phosphonates; phosphates, or combinations including at least one of the foregoing heat stabilizers. Heat stabilizers are generally used in amounts of from 0.01 to 0.5 parts by weight based on 100 parts by weight of the total composition, excluding any filler.
Exemplary antioxidants include, for example, organophosphites; alkylated monophenols or polyphenols; alkylated reaction products of polyphenols with dienes; butylated reaction products of para-cresol or dicyclopentadiene; alkylated hydroquinones; hydroxylated thiodiphenyl ethers; alkylidene-bisphenols; benzyl compounds; amides or esters of beta-(3,5-di-tert-butyl-4-hydroxyphenyl)-propionic acid; esters of beta-(5-tert-butyl-4-hydroxy-3-methylphenyl)-propionic acid with monohydric or polyhydric alcohols; esters of thioalkyl or thioaryl compounds; or combinations including at least one of the foregoing antioxidants. Antioxidants are generally used in amounts of from 0.01 to 0.5 parts by weight, based on 100 parts by weight of the total composition, excluding any filler.

The disclosed thermoplastic compositions can further comprise an optional filler, such as, for example, an inorganic filler or reinforcing agent. The specific composition of filler, if present, can vary, provided that the filler is chemically compatible with the remaining components of the thermoplastic composition. In one aspect, the thermoplastic composition comprises a mineral filler such as talc.

In another aspect, an exemplary filler can comprise metal silicates and silica powders; boron-containing oxides of aluminum (Al), magnesium (Mg), or titanium (Ti); anhydrous or hydrated calcium sulfate; wollastonite; hollow and/or solid glass spheres; kaolin; single crystal metallic or inorganic fibers or "whiskers"; glass or carbon fibers (including continuous and chopped fibers, including flat glass fibers) ; sulfides of molybdenum (Mo) or zinc (Zn); barium compounds; metals and metal oxides; flaked fillers; fibrous fillers; short inorganic fibers reinforcing organic fibrous fillers formed from organic polymers capable of forming fibers (*e.g.,* polyether ether ketone (PEEK), polyetherimide (PEI), polytetrafluoroethylene (PTFE), polyphenylene sulfide (PPS)); and fillers and reinforcing agents such as mica, clay, feldspar, flue dust, fillite, quartz, quartzite, perlite, tripoli, diatomaceous earth, carbon black, or the like, or combinations comprising at least one of the foregoing fillers or reinforcing agents.

Exemplary light stabilizers include, for example, benzotriazoles, 2-(2-hydroxy-5-tert-octylphenyl)-benzotriazole and 2-hydroxy-4-n-octoxy benzophenone or a combination thereof. Light stabilizers are generally used in amounts of from 0.1 to 1.0 parts by weight (pbw) or about 0.1 pbw to about 1.0 pbw, based on 100 parts by weight of the total composition, excluding any filler.

Exemplary plasticizers include, for example, phthalic acid esters such as dioctyl-4,5-epoxy-hexahydrophthalate, tris-(octoxycarbonylethyl)isocyanurate, tristearin, epoxidized soybean oil or the like, or combinations including at least one of the foregoing plasticizers. Plasticizers are generally used in amounts of from 0.5 to 3.0 parts by weight, or from about 0.5 pbw to about 3 pbw, based on 100 parts by weight of the total composition, excluding any filler.

Exemplary antistatic agents include, for example, glycerol monostearate, sodium stearyl sulfonate, sodium dodecylbenzenesulfonate or the like, or combinations of the foregoing antistatic agents. In one aspect, carbon fibers, carbon nanofibers, carbon nanotubes, carbon black, or any combination of the foregoing may be used in a polymeric resin containing chemical antistatic agents to render the composition electrostatically dissipative.

Exemplary mold releasing agents or lubricants include for example stearates (including metal or alkyl stearates) or waxes. When used, mold releasing agents are generally used in amounts of from 0.1 to 1.0 parts by weight (or from about 0.1 pbw to about 1 pbw), or from 0.1 to 5 parts by weight (or from about 0.1 pbw to about 5 pbw) based on 100 parts by weight of the total composition, excluding any filler.

Additional fillers may include impact modifiers. Suitable impact modifiers can include an epoxy-functional block copolymer. The epoxy-functional block copolymer can include units derived from a C2-20 olefin and units derived from a glycidyl (meth)acrylate. Exemplary olefins include ethylene, propylene, butylene, and the like. The olefin units can be present in the copolymer in the form of blocks, e.g., as polyethylene, polypropylene, polybutylene, and the like blocks. It is also possible to use mixtures of olefins, i.e., blocks containing a mixture of ethylene and propylene units, or blocks of polyethylene together with blocks of polypropylene.

In addition to glycidyl (meth)acrylate units, the epoxy-functional block copolymers can further include additional units, for example C1-4 alkyl (meth)acrylate units. In one aspect, the impact modifier is terpolymeric, comprising polyethylene blocks, methyl acrylate blocks, and glycidyl methacrylate blocks. Specific impact modifiers are a co- or terpolymer including units of ethylene, glycidyl methacrylate (GMA), and methyl acrylate. Suitable impact modifiers include the ethylene-methyl acrylate-glycidyl methacrylate terpolymer comprising 8 wt % glycidyl methacrylate units available under the trade name LOTADER AX8900. Another epoxy-functional block copolymer that can be used in the composition includes ethylene acrylate, for example an ethylene-ethylacrylate copolymer having an ethylacrylate content of less than 20%, available from Rohm and Haas (Dow Chemical) under the trade name Paraloid™ EXL-3330. It will be recognized that combinations of impact modifiers may be used. In some aspects, the impact modifier may be present in an amount from greater than about 0 wt % to about 10 wt %. In further aspects, the impact modifier is present in an amount from about 0.01 wt % to about 8 wt %, or from about 0.01 wt % to about 7 wt %, or from about 0.01 wt % to about 6 wt %, or from about 2 wt % to about 8 wt %, or from about 3 wt % to about 7 wt %.

As an example, the disclosed composition can comprise an impact modifier. The impact modifier can be a chemically reactive impact modifier. By definition, a chemically reactive impact modifier can have at least one reactive group such that when the impact modifier is added to a polymer composition, the impact properties of the composition (expressed in the values of the IZOD impact) are improved. In some examples, the chemically reactive impact modifier can be an ethylene copolymer with reactive functional groups selected from, but not limited to, anhydride, carboxyl, hydroxyl, and epoxy.

In further aspects of the present disclosure, the composition can comprise a rubbery impact modifier. The rubber impact modifier can be a polymeric material which, at room temperature, is capable of recovering substantially in shape and size after removal of a force. However, the rubbery impact modifier should typically have a glass transition temperature of less than 0° C. In certain aspects, the glass transition temperature (Tg) can be less than -5 °C, -10 °C, -15 °C, with a Tg of less than -30 °C typically providing better performance. Representative rubbery impact modifiers

can include, for example, functionalized polyolefin ethylene-acrylate terpolymers, such as ethylene-acrylic esters-maleic anhydride (MAH) or glycidyl methacrylate (GMA). The functionalized rubbery polymer can optionally contain repeat units in its backbone which are derived from an anhydride group containing monomer, such as maleic anhydride. In another scenario, the functionalized rubbery polymer can contain anhydride moieties which are grafted onto the polymer in a post polymerization step.

In one example, the composition can comprise a core-shell copolymer impact modifier having about 80 wt. % of a core comprising poly(butyl acrylate) and about 20 wt. % of a shell comprising poly(methyl methacrylate). In a further example, the impact modifier may comprise an acrylic impact modifier such as ethylene-ethylacrylate copolymer with an ethyl acrylate content of less than 20 wt. % (such as EXL 3330 as supplied by SABIC). The composition may comprise about 5 wt. % of the ethylene-ethylacrylate copolymer. In a yet further example, the impact modifier may comprise maleic anhydride EP copolymer.

### Properties

The disclosed compositions combine polycarbonate, polyalkylene polymer, a processing aid, functional fillers, and a flame retardant additive to provide improved extrusion behavior as well as physical and mechanical performance at least comparable to conventional compositions in the absence of the processing aid. In various examples, the compositions may exhibit comparable or improved notched Izod impact performance when compared to conventional resins in the absence of the processing aid.

### Methods of Manufacture

In one aspect, methods may comprise forming a molded part from the formed blend composition.

The polycarbonate thermoplastic compositions can be manufactured by various methods known in the art. For example, powdered polycarbonate, and other optional components are first blended, optionally with any fillers, in a high speed mixer or by hand mixing. The blend is then fed into the throat of a twin-screw extruder via a hopper. Alternatively, at least one of the components can be incorporated into the composition by feeding it directly into the extruder at the throat and/or downstream through a sidestuffer, or by being compounded into a master batch with a desired polymer and fed into the extruder. The extruder is generally operated at a temperature higher than that necessary to cause the composition to flow. The extrudate can be immediately quenched in a water bath and pelletized. The pellets so prepared can be one-fourth inch long or less as desired. Such pellets can be used for subsequent molding, shaping, or forming. The disclosed compositions exhibit suppressed die buildup behavior during the extrusion/molding processes described herein.

### Articles of Manufacture

Shaped, formed, or molded articles including the thermoplastic compositions are also provided. The thermoplastic compositions can be molded into useful shaped articles by a variety of means such as injection molding, extrusion, rotational molding, blow molding and thermoforming to form articles such as, for example, personal computers, notebook and portable computers, cell phone antennas and other such communications equipment, medical applications, radio frequency identifications (RFID) applications, automotive applications, and the like.

The blended thermoplastic compositions, or compounds, disclosed herein provide robust plating performance while maintaining good mechanical properties, for example, a notched Izod impact energy at 23 °C or at -20 °C as described elsewhere herein. Evaluation of the mechanical properties can be performed through various tests, such as Izod test, Charpy test, Gardner test, etc., according to several standards (e.g., ASTM D256). Unless specified to the contrary, all test standards described herein refer to the most recent standard in effect at the time of filing of this application.

In a further aspect, the resulting disclosed compositions can be used to provide any desired shaped, formed, or molded articles. For example, the disclosed thermoplastic compositions may be molded into useful shaped articles by a variety of means such as injection molding, extrusion, rotational molding, blow molding and thermoforming. As noted above, the disclosed thermoplastic compositions are particularly well suited for use in the manufacture of electronic components and devices. As such, according to some aspects, the disclosed thermoplastic compositions can be used to form articles such as printed circuit board carriers, burn in test sockets, flex brackets for hard disk drives, and the like.

### ASPECTS

The present disclosure comprises at least the following aspects.

Aspect 1. A composition for suppressed die lip buildup, the composition comprising: from about 20 wt. % to about 98 wt. % of a polycarbonate; from about 0.01 wt. % to about 30 wt. % of a polybutylene terephthalate; from about

0.5 wt. % to about 60 wt. % of a functional filler; from about 0.1 wt. % to about 5 wt. % of an ultra high molecular weight polydimethylsiloxane; and from about 0.01 wt. % to about 30 wt. % of a flame retardant component, wherein the combined weight percent value of all components does not exceed 100 wt. %, and all weight percent values are based on the total weight of the composition, wherein the composition exhibits a notched Izod impact strength of greater than 30 J/m when tested in accordance with ASTM D256, and wherein the composition exhibits less die buildup during a continuous extrusion process when compared to a substantially similar composition in the absence of the ultra high molecular weight polydimethylsiloxane.

Aspect 2. The composition of aspect 1, wherein the ultra high molecular weight polydimethylsiloxane is present in an amount from 0.1 wt. % to 2 wt. %.

Aspect 3. A composition for suppressed die lip buildup, the composition comprising: from about 20 wt. % to about 98 wt. % of a polycarbonate; from about 0.01 wt. % to about 30 wt. % of a polyalkylene polymer; from about 0.5 wt. % to about 60 wt. % of a functional filler; and from about 0.1 wt. % to about 5 wt. % of a processing aid; wherein the composition exhibits a notched Izod impact strength of greater than 30 J/m when tested in accordance with ASTM D256, and wherein the composition exhibits less die buildup during a continuous extrusion process when compared to a substantially similar composition in the absence of the processing aid.

Aspect 4. The composition of aspect 3, further comprising a flame retardant component.

Aspect 5. The composition of aspect 4, wherein the flame retardant component is present from about from about 0.01 wt. % to about 30 wt. %.

Aspect 6. The composition of any one of aspects 3-5, further comprising an impact modifier.

Aspect 7. The composition of aspect 6, wherein the impact modifier comprises an ethylene-propylene rubber, a maleic anhydride grafted polyethylene; a maleic anhydride functionalized copolymer, ACR (Acrylic Rubber) type of impact modifier; MBS (Methylmethacrylate-butadiene-styrene terpolymer) type of impact modifier; EGMA (Ethylene-Co-Glycidyl Methacrylate) or EMAGMA (Ethylene-methyl acrylate with glycidyl methacrylate) type of impact modifiers; SBS or SEBS type of impact modifiers; polyester ether elastomers, ethylene ethyl acrylate, or a combination thereof.

Aspect 8. The composition of any one of aspects 3-7, wherein the processing aid comprises an ultra-high molecular weight polydimethylsiloxane.

Aspect 9. The composition of any one of aspects 3-7, wherein the processing aid comprises a polydimethylsiloxane having a viscosity of at least 10 million mm2/sec when measured according to ASTM D7042.

Aspect 10. The composition of any one of aspects 3-7, wherein the processing aid comprises a polydimethylsiloxane having a viscosity of from about 10 million mm2/sec to about 50 million $mm^2$/sec when measured according to ASTM D7042.

Aspect 11. The composition of any one of aspects 3-7, wherein the processing aid comprises a polydimethylsiloxane having a molecular weight of at least 110,000 g/mol when testing using GPC according to a polystyrene standard.

Aspect 12. The composition of any one of aspects 3-11, wherein the polyalkylene polymer comprises polybutylene terephthalate (PBT), polyethylene terephthalate (PET), other polyesters, polyethylene (PE) or a combination thereof.

Aspect 13. The composition of any of aspects 1-12, wherein the polycarbonate comprises a bisphenol A derived polycarbonate, a high flow ductile polycarbonate, a branched polycarbonate, or a combination thereof.

Aspect 14. The composition of any of aspects 1-12, wherein the polycarbonate comprises a high Mw high flow/ductile polycarbonate, a low Mw high flow/ductile polycarbonate, a polycarbonate copolymer including repeating units derived from Bisphenol-A and repeating units derived from sebacic acid, a Bisphenol-A polycarbonate homopolymer, a polycarbonate polysiloxane copolymer, or a combination thereof.

Aspect 15. The composition of any one of aspects 1-14, wherein the functional filler comprises an electrically conductive filler, a thermally conductive filler, or a modulus enhancing filler, or a combination thereof.

Aspect 16. The composition of any one of aspects 1-14, wherein the functional filler comprises Boron Nitride (BN), SiC, graphite, expanded graphite, expandable graphite, graphene, carbon fiber, carbon powder, carbon nanotube, ZnS, CaO, MgO, ZnO, $TiO_2$, $H_2Mg_3(SiO_3)_4$, $CaCO_3$, $Mg(OH)_2$, mica, BaO, γ-AlO(OH), α-AlO(OH), $Al(OH)_3$, $BaSO_4$, $CaSiO_3$, $SiO_2$, solid glass bead, hollow glass bead, glass fiber, basalt fiber, $MgO{\bullet}_xAl_2O_3$, $CaMg(CO_3)_2$, wollastonite, and a clay, or a combination thereof.

Aspect 17. The composition of any one of aspects 1-16, further comprising at least one additive selected from a pigment, a flow promoter, a de-molding agent, a thermal stabilizer, a light stabilizer, a UV-resistant or UV absorbent, a flame anti-dripping agent, or a combination thereof.

Aspect 18. An article comprising the composition of any one of aspects 1-17.

Unless otherwise expressly stated, it is in no way intended that any method set forth herein be construed as necessarily requiring that its steps be performed in a specific order. Where a method claim does not specifically state in the claims or descriptions that the steps are to be limited to a specific order, it is no way intended that an order be inferred, in any respect.

All publications mentioned herein are incorporated herein by reference to, for example, describe the methods and/or materials in connection with which the publications are cited.

It is also to be understood that the terminology used herein is for the purpose of describing particular aspects only and is not intended to be limiting. As used in the specification and in the claims, the term "comprising" may include the aspects "consisting of' and "consisting essentially of." Unless defined otherwise, all technical and scientific terms used herein have the same meaning as commonly understood by one of ordinary skill in the art to which this disclosure belongs.

Unless otherwise specified, average molecular weights refer to weight average molecular weights ($M_w$) and percentages refer to weight percentages (wt. %) which, unless specifically stated to the contrary, are based on the total weight of the composition in which the component is included. In all cases, where combinations of ranges are provided for a given composition, the combined value of all components does not exceed 100 wt%.

Component materials to be used to prepare disclosed thermoplastic compositions of the disclosure as well as the thermoplastic compositions themselves to be used within methods are disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. This concept applies to all aspects of this application including, but not limited to, steps in methods of making and using the thermoplastic compositions of the disclosure.

References in the specification and concluding claims to parts by weight, of a particular element or component in a composition or article denotes the weight relationship between the element or component and any other elements or components in the composition or article for which a part by weight is expressed. Thus, in a composition containing 2 parts by weight of component X and 5 parts by weight component Y, X and Y are present at a weight ratio of 2:5 and are present in such ratio regardless of whether additional components are contained in the compound.

Compounds disclosed herein are described using standard nomenclature. For example, any position not substituted by any indicated group is understood to have its valency filled by a bond as indicated, or a hydrogen atom.

As used herein, the terms "number average molecular weight" or "Mn" can be used interchangeably, and refer to the statistical average molecular weight of all the polymer chains in the sample and is defined by the formula:

$$M_n = \frac{\sum N_i M_i}{\sum N_i},$$

where $M_i$ is the molecular weight of a chain and $N_i$ is the number of chains of that molecular weight. $M_n$ can be determined for polymers, *e.g.,* polycarbonate polymers, by methods well known to a person having ordinary skill in the art using molecular weight standards, *e.g.,* polycarbonate standards or polystyrene standards, preferably certified or traceable molecular weight standards.

As used herein, the terms "weight average molecular weight" or "Mw" can be used interchangeably, and are defined by the formula:

$$M_w = \frac{\sum N_i {M_i}^2}{\sum N_i M_i},$$

where $M_i$ is the molecular weight of a chain and $N_i$ is the number of chains of that molecular weight. Compared to $M_n$, $M_w$ takes into account the molecular weight of a given chain in determining contributions to the molecular weight average. Thus, the greater the molecular weight of a given chain, the more the chain contributes to the $M_w$. $M_w$ can be determined for polymers, *e.g.* polycarbonate polymers, by methods well known to a person having ordinary skill in the art using molecular weight standards, *e.g.* polycarbonate standards or polystyrene standards, preferably certified or traceable molecular weight standards.

In one aspect, "substantially free of' may refer to less than 0.5 wt. % or less than about 0.5 wt.% present in a given composition or component. In another aspect, substantially free of can be less than 0.1 wt. %, or less than about 0.1 wt.%. In another aspect, substantially free of can be less than 0.01 wt. %, or less than about 0.01 wt.%. In yet another aspect, substantially free of can be less than 100 parts per million (ppm), or less than about 100 ppm. In yet another aspect, substantially free can refer to an amount, if present at all, below a detectable level.

## EXAMPLES

The following examples are put forth so as to provide those of ordinary skill in the art with a complete disclosure and description of how the methods, devices, and systems disclosed and claimed herein are made and evaluated and

are intended to be purely exemplary and are not intended to limit the disclosure. Best efforts have been made to ensure accuracy with respect to numbers (*e.g.,* amounts, temperature, etc.), but some errors and deviations should be accounted for. Unless indicated otherwise, weight percent, temperature is in degrees Celsius (°C) (ambient temperature unless specified otherwise), and pressure is at or near atmospheric.

Compositions were prepared via a twin-screw extruder compounding process. The compositions were injection molded under normal PC processing conditions. More specifically, samples were prepared using a Twin screw extruder (Toshiba TEM-37BS, length/diameter (L/D) of 40.5), with an extruder barrel temperature at 245-265 °C. Formed pellets extruded from the extruder were then injection molded according to requisite dimensions for testing bars. Table 1 presents the components and chemical descriptions.

**Table 1.** Components.

| Item description | Chemical description | CAS | Source |
|---|---|---|---|
| PC1 | Sebacic acid/BPA/PCP polyester carbonate; high flow ductile (HFD) high Mw | 137397-37-6 | SABIC |
| PC-silox C9030P | Opaque PC-Siloxane copolymer; C9030P | 202483-49-6 | SABIC |
| PC2 C019C | 1,1,1-tris(4-hydroxyphenyl)ethane THPE Branched PC Powder; C019C | 111211-39-3 | SABIC |
| PBT | PBT, high viscosity at 1.2 $cm^3/g$ as measured in 60:40 phenol:tetrachloroethane, 1100X | 26062-94-2 | Changchun Plastic Co., Ltd., |
| PDMS-UHMW | PEarlene SiPC MB-01 (PC: polycarbonate carrier) | 556-67-2 | Momentive Performance Materials |
| Talc | Hayashi Kasei Talc GH7(05) | 14807-96-6 | Hayashi Kasei |
| BNHN | Boron Nitride BNHN | 10043-11-5 | Dandong Chemical Engineering Institute Co., Ltd. |
| Coated $TiO_2$ | COATED $TIO_2$; K2233 | 13463-67-7 | Kronos |
| PTFE | TSAN; styrene encapsulated polytetrafluoroethylene | 9003-54-7,9002-84-0 | SABIC |
| Irganox107 6 | HINDERED PHENOL ANTI-OXIDANT, Irganox® 1076 | 002082-79-3 | Ciba Specialty Chemicals (China) Ltd. |
| PETS | PENTAERYTHRITOL TETRASTEARATE | 115-83-3 | Faci Asia Pacific PTE LTD |
| HDPE 5070 | High density polyethylene HDPE Daelim Poly® 5070(UV) | 9002-88-4 | Daelim industrial Co., LTD. |
| EXXELOR VA1803 | Maleated EP copolymer: EXXELOR™ VA1803; impact modifier | 31069-12-2 | ExxonMobil Chemical |
| FR | Fushimi Rabitle® FR110T (Phenoxyphosphazene) flame retardant additive | 28212-48-8 | Fushimi |

Samples were tested according to the following standards.

Impact tests (notched and unnotched Izod) were performed according to ASTM D256 and ASTM D4812 respectively, at room temperature

Melt Flow Volume Rate (MVR) was determined according to ASTM D1238.

Density data was obtained according to ASTM D792.

Heat deflection temperature (HDT) was measured using ASTM D648, under stress 1.82 MPa or 0.45 MPa, part thickness 3.2 mm.

Table 2 presents comparative examples C1 and C2 that embody the claim of this disclosure. Inventive sample E1 is the corresponds to aspects of the present disclosure.

Table 2. Formulation of samples and properties.

| *Item* | Component description | Unit | C1 | C2 | E1 |
|---|---|---|---|---|---|
| PC1 | Sebacic acid/BPA/PCP polyestercarbonate | % | 42.3 | 41.8 | 40.8 |
| PC-silox C9030P | Opaque PC-Siloxane copolymer | % | 10 | 10 | 10 |
| PC2 C019C | THPE Branched PC Powder | % | 10 | 10 | 10 |
| PBT | PBT, High Viscosity, 1100X | % | | 0.5 | 0.5 |
| PDMS-UHMW | PEarlene SiPC MB-01 (PC: polycarbonate carrier) | % | | | 1 |
| Talc | Hayashi Kasei Talc GH7(05) | % | 7 | 7 | 7 |
| BNHN | Boron Nitride BNHN | % | 5 | 5 | 5 |
| Coated TiO2 | COATED TIO2 *K2233* | % | 13 | 13 | 13 |
| PTFE | ENCAPSULATED PTFE | % | 0.5 | 0.5 | 0.5 |
| Irganox1076 | HINDERED PHENOL ANTI-OXIDANT, Irganox® 1076 | % | 0.1 | 0.1 | 0.1 |
| PETS | PENTAERYTHRITOL TETRASTEARATE | % | 0.1 | 0.1 | 0.1 |
| HDPE 5070 | HDPE Daelim Poly® 5070(UV) | % | 2 | 2 | 2 |
| EXXELOR VA1803 | Maleated EP copolymer: EXXELOR™ VA1803 | % | 2 | 2 | 2 |
| *FR* | Fushimi Rabitle® FR110T (Phenoxyphosphazene) | | 8 | 8 | 8 |
| ***Formulation Total*** | | | **100.00** | **100.00** | **100.00** |
| ***Test Code*** | **Test Description** | **Unit** | C1 | C2 | E1 |
| | ***MVR-Avg (300C/2.16kg/360s)*** | **$cm^3$/10 min** | 13.16 | 18.73 | 17.84 |
| | ***Deflection temp-Avg (1.82MPa, 3.2mm thick)*** | **°C** | 92 | 91.1 | 92.6 |
| | ***Notched Izod Impact Strength-Avg*** | **J/m** | 408 | 304 | 335 |
| | ***Unnotched Izod Impact Strength-Avg*** | **J/m** | 2160 | 2150 | 2150 |
| | ***Density-Avg*** | - | 1.395 | 1.394 | 1.395 |
| ***0.7 mm 23C48H*** | **No. of Burning Drops** | | 0 | 0 | 0 |
| | **p(FTP)V0** | | 0.29 | 0.99 | 0.99 |
| | **p(FTP)V1** | | 0.97 | 1.00 | 1.00 |
| | **FOT 5 (s)** | | 47.35 | 26.95 | 29.3 |
| ***0.7 mm 70C168H*** | **No. of Burning Drops** | | 0 | 0 | 0 |
| | **p(FTP)V0** | | 0.87 | 0.87 | 0.95 |
| | **p(FTP)V1** | | 1.00 | 1.00 | 1.00 |
| | **FOT 5 (s)** | | 43.8 | 33.25 | 34.15 |

For comparative sample C1, an HFD PC, opaque PC-Siloxane copolymer and a branched PC were used as the base resin. Different functional fillers including talc, boron nitride and $TiO_2$ were added in the composition. HDPE (2 wt%) was added to improve filler and maleic anhydride EP copolymer dispersion. The phosphorous flame retardant phosphazene (8 wt%), together with 0.5wt% of TSAN to promote flame resistant performance (as an anti-drip agent). Other additives include anti-oxidant Irganox1076 and flow promotor PETs. Sample C1 shows good impact strength, good flow, but flame retardant (FR) performance for $V_0$ at a thickness of 0.7 mm was not very robust and the p(FTP)$V_0$ under normal flame (over 23°C, with 48 hour aging) only shows 0.29 (1 corresponds to best performance).

As shown, PBT was introduced with comparative sample C2. The addition of PBT enhanced FR performance

evidenced by an improved p(FTP)$V_0$ and a decrease in the total flame time FOT 5. However, notched Izod impact strength has decreased.

Inventive sample E1 includes the UHMW PDMS PC master batch (PEarlene SiPC MB-01). The PDMS content of the masterbatch 30% by weight. Sample E1 exhibits robust FR performance while maintaining notched Izod impact strength. FIG. 1 shows that E1 also has improved die lip build up when compared to sample C2 for strand extrusion over 10mins. As shown, sample E1 has considerably less visible polymer buildup around the die.

Similar improved die lip buildup behavior was observed for samples in the absence of a flame retardant additive. Table 3 shows additional comparative sample C3 and inventive sample E2.

Table 3. Formulation and properties of samples without FR additive.

| **Item Code** | **Item Description** | **Unit** | **C3** | **E2** |
|---|---|---|---|---|
| HFD_high Mw | Sebacic acid/BPA/PCP polyestercarbonate | % | 33.3 | 32.3 |
| C9030P | Opaque PC-Siloxane copolymer | % | 10 | 10 |
| C019C | THPE Branched PC Powder | % | 10 | 10 |
| PEarlene SiPC MB-01 | Pearlene SiPC MB-01 (PC: polycarbonate carrier) | % | | 1 |
| Talc GH7(05) | Hayashi Kasei Talc GH7(05) | % | 15 | 15 |
| BN-HN | Boron Nitride BNHN | % | 5 | 5 |
| Coated TiO2 K2233 | COATED TIO2 | % | 20 | 20 |
| ENCAPSULATED PTFE | ENCAPSULATED PTFE | % | 0.5 | 0.5 |
| Irganox1076 | HINDERED PHENOL ANTI-OXIDANT, Irganox® 1076 | % | 0.1 | 0.1 |
| PETs | PENTAERYTHRITOL TETRASTEARATE | % | 0.1 | 0.1 |
| HDPE 5070 | HDPE Daelim Poly® 5070(UV) | % | 2 | 2 |
| EXXELOR VA1803 | Maleated EP copolymer: EXXELOR™ VA1803 | % | 4 | 4 |
| **Formulation Total** | | | **100.00** | **100.00** |
| **Test Code** | **Test Description** | **Unit** | **C3** | **E2** |
| **MVR-Avg (300C/2.16kg/360s)** | | $cm^3$/10 min | 7.04 | 7.34 |
| **Deflection temp-Avg (1.82MPa, 3.2mm thick)** | | °C | 110.3 | 111.5 |
| **Notched Izod Impact Strength-Avg** | | J/m | 294 | 317 |
| **Unnotched Izod Impact Strength-Avg** | | J/m | 988 | 1030 |
| **Density-Avg** | | - | 1.536 | 1.526 |

C3 is similar to the comparative samples C1 and C2 in that a similar resin and filler building block was used, but no FR component was included. Sample C3 also includes more fillers than samples C1 and C2. Compared with C3, example demonstrates that a processing aid such as the UHMW PDMS increase impact properties and suppresses die lip build up as seen in FIG. 2.

It will be apparent to those skilled in the art that various modifications and variations can be made in the present disclosure without departing from the scope or spirit of the disclosure. Other aspects of the disclosure will be apparent to those skilled in the art from consideration of the specification and practice of the disclosure disclosed herein. It is intended that the specification and examples be considered as exemplary only, with a true scope and spirit of the disclosure being indicated by the following claims.

The patentable scope of the disclosure is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A composition for suppressed die lip buildup, the composition comprising:

   from about 20 wt. % to about 98 wt. % of a polycarbonate;
   from about 0.01 wt. % to about 30 wt. % of a polybutylene terephthalate;
   from about 0.5 wt. % to about 60 wt. % of a functional filler;
   from about 0.1 wt. % to about 5 wt. % of an ultra high molecular weight polydimethylsiloxane; and
   from about 0.01 wt. % to about 30 wt. % of a flame retardant component,
   wherein the combined weight percent value of all components does not exceed 100 wt. %, and all weight percent values are based on the total weight of the composition,
   wherein the composition exhibits a notched Izod impact strength of greater than 30 J/m when tested in accordance with ASTM D256, and
   wherein the composition exhibits less die buildup during a continuous extrusion process when compared to a substantially similar composition in the absence of the ultra high molecular weight polydimethylsiloxane.

2. The composition of claim 1, wherein the ultra high molecular weight polydimethylsiloxane is present in an amount from 0.1 wt. % to 2 wt. %.

3. A composition for suppressed die lip buildup, the composition comprising:

   from about 20 wt. % to about 98 wt. % of a polycarbonate;
   from about 0.01 wt. % to about 30 wt. % of a polyalkylene polymer;
   from about 0.5 wt. % to about 60 wt. % of a functional filler; and
   from about 0.1 wt. % to about 5 wt. % of a processing aid;
   wherein the composition exhibits a notched Izod impact strength of greater than 30 J/m when tested in accordance with ASTM D256, and
   wherein the composition exhibits less die buildup during a continuous extrusion process when compared to a substantially similar composition in the absence of the processing aid.

4. The composition of claim 3, further comprising a flame retardant component.

5. The composition of claim 4, wherein the flame retardant component is present from about from about 0.01 wt. % to about 30 wt. %.

6. The composition of any one of claims 3-5, further comprising an impact modifier.

7. The composition of claim 6, wherein the impact modifier comprises an ethylene-propylene rubber, a maleic anhydride grafted polyethylene; a maleic anhydride functionalized copolymer, ACR (Acylic Rubber) type of impact modifier; MBS (Methylmethacrylate-butadiene-styrene terpolymer) type of impact modifier; EGMA (Ethylene-Co-Glycidyl Methacrylate) or EMAGMA (Ethylene-methyl acrylate with glycidyl methacrylate) type of impact modifiers; SBS or SEBS type of impact modifiers; polyester ether elastomers, ethylene ethyl acrylate, or a combination thereof.

8. The composition of any one of claims 3-7, wherein the processing aid comprises an ultra-high molecular weight polydimethylsiloxane.

9. The composition of any one of claims 3-7, wherein the processing aid comprises a polydimethylsiloxane having a viscosity of at least 10 million $mm^2$/sec when measured according to ASTM D7042.

10. The composition of any one of claims 3-7, wherein the processing aid comprises a polydimethylsiloxane having a viscosity of from about 10 million $mm^2$/sec to about 50 million $mm^2$/sec when measured according to ASTM D7042.

11. The composition of any one of claims 3-7, wherein the processing aid comprises a polydimethylsiloxane having a molecular weight of at least 110,000 g/mol when testing using GPC according to a polystyrene standard.

12. The composition of any one of claims 3-11, wherein the polyalkylene polymer comprises polybutylene terephthalate (PBT), polyethylene terephthalate (PET), other polyesters, polyethylene (PE) or a combination thereof.

**13.** The composition of any of claims 1-12, wherein the polycarbonate comprises a high Mw high flow/ductile polycarbonate, a low Mw high flow/ductile polycarbonate, a polycarbonate copolymer including repeating units derived from Bisphenol-A and repeating units derived from sebacic acid, a Bisphenol-A polycarbonate homopolymer, a polycarbonate polysiloxane copolymer, or a combination thereof.

**14.** The composition of any one of claims 1-14, wherein the functional filler comprises an electrically conductive filler, a thermally conductive filler, or a modulus enhancing filler, or a combination thereof.

**15.** An article comprising the composition of any one of claims 1-14.

Europäisches Patentamt
European Patent Office
Office européen des brevets

# EUROPEAN SEARCH REPORT

Application Number
EP 19 15 3474

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | CN 104 845 317 A (QINGDAO TONGCHUANG ENERGY SAVING ENVIRONMENTAL PROT ENG CO LTD) 19 August 2015 (2015-08-19)<br>* examples 1, 2 *<br>----- | 1-8, 12-15<br>9-11 | INV.<br>C08L69/00<br>C08L67/02<br>C08L83/04<br>C08L51/04<br>C08L23/08<br><br>ADD.<br>C08K3/04<br>C08K3/14<br>C08K3/28<br>C08K5/42<br>C08G63/183<br>C08K3/22<br>C08K3/34<br>C08K3/38 |
| X<br>A | CN 104 693 746 A (QINGDAO TONGCHUANG ENERGY SAVING ENVIRONMENTAL PROT ENG CO LTD) 10 June 2015 (2015-06-10)<br>* example 1 *<br>----- | 1-8, 12-15<br>9-11 | |
| X<br>A | US 2015/353732 A1 (WANG HUANBING [CN]) 10 December 2015 (2015-12-10)<br>* paragraph [0279] - paragraph [0322]; example Work 3H; tables 1, 9 *<br>----- | 3-7, 12-15<br>1,2,8-11 | |
| A | US 2018/258241 A1 (ZIA QAMER [DE] ET AL) 13 September 2018 (2018-09-13)<br>* paragraph [0037] - paragraph [0050]; example 3; tables 3, 4 *<br>----- | 1-15 | |
| | | | TECHNICAL FIELDS SEARCHED (IPC) |
| | | | C08K<br>C08G<br>C08L |

The present search report has been drawn up for all claims

1

| Place of search | Date of completion of the search | Examiner |
|---|---|---|
| The Hague | 1 August 2019 | Enescu, Cristina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 19 15 3474

This annex lists the patent family members relating to the patent documents cited in the above-mentioned European search report. The members are as contained in the European Patent Office EDP file on
The European Patent Office is in no way liable for these particulars which are merely given for the purpose of information.

01-08-2019

| Patent document cited in search report | Publication date | Patent family member(s) | Publication date |
| --- | --- | --- | --- |
| CN 104845317 A | 19-08-2015 | NONE | |
| CN 104693746 A | 10-06-2015 | NONE | |
| US 2015353732 A1 | 10-12-2015 | CN 106536627 A | 22-03-2017 |
| | | EP 3152258 A1 | 12-04-2017 |
| | | KR 20170005429 A | 13-01-2017 |
| | | US 2015353732 A1 | 10-12-2015 |
| | | WO 2015189753 A1 | 17-12-2015 |
| US 2018258241 A1 | 13-09-2018 | US 2018258241 A1 | 13-09-2018 |
| | | WO 2018163098 A1 | 13-09-2018 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 7786246 B